# EUROPÄISCHE PATENTSCHRIFT

(11) **EP 1 419 059 B1**
(45) Veröffentlichungstag und Bekanntmachung des Hinweises auf die Patenterteilung: **14.06.2006**
(21) Anmeldenummer: 02764806.2
(22) Anmeldetag: 30.07.2002
(51) Int. Cl.: B60K 15/03

(54) **FAHRZEUG-KRYOTANK ZUM AUFBEWAHREN EINES KRYO-KRAFTSTOFFS IN EINEM KRAFTFAHRZEUG**
CRYOGENIC TANK FOR STORING CRYOGENIC FUEL IN A MOTOR VEHICLE
RESERVOIR CRYOGENIQUE DE VEHICULE DESTINE AU STOCKAGE D'UN CARBURANT CRYOGENIQUE DANS UN VEHICULE AUTOMOBILE

(30) Priorität: 22.08.2001 DE 10141048
(43) Veröffentlichungstag der Anmeldung: 19.05.2004
(73) Patentinhaber: Bayerische Motoren Werke Aktiengesellschaft, 80809 München (DE)
(72) Erfinder: SCHNAGL, Johann, 82061 Neuried (DE)
(86) Internationale Anmeldenummer: PCT/EP2002/008445
(87) Internationale Veröffentlichungsnummer: WO 2003/018344

(56) Entgegenhaltungen:
- WO-A-85/00419
- DE-A- 4 212 625
- DE-A- 4 212 626
- DE-A- 19 546 619

## Beschreibung

Die Erfindung betrifft einen Fahrzeug-Kryotank zum Aufbewahren eines Kryo-Kraftstoffs in einem Kraftfahrzeug, mit einem Speicher-Innenbehälter sowie einem diesen unter Ausbildung eines Isolationsvakuums umgebenden Außenbehälter, wobei ein Wärmeeintrag von außen in oder an den Innenbehälter einschaltbar bzw. ausschaltbar ist. Zum technischen Umfeld wird beispielshalber auf die DE 195 46 618 C2 verwiesen.

Auf der Suche nach alternativen Antriebsenergien für Kraftfahrzeuge wird auch mit Flüssiggasen im allgemeinen und mit Wasserstoff im besonderen gearbeitet. Dabei wird ein Flüssiggas (z.B. LNG) oder Wasserstoff in flüssiger Form in einem sog. Kryotank gespeichert. Verschiedene Leitungen, in denen bspw. Ventile, aber auch Wärmetauscher oder allgemein fluidführende Elemente des Tank-Systems vorgesehen sind, führen in den Tank bzw. aus diesem heraus, so u.a. zu der mit dem Kraftstoff betriebenen Brennkraftmaschine.

Gespeichert wird der unter üblichen Umgebungsbedingungen gasförmige Kraftstoff stark gekühlt in einem hier sog. Innenbehälter eines Kryotanks, der zur Minimierung von Wärmeeinfall von einem sog. Außenbehälter umgeben ist, wobei der Raum zwischen dem Innenbehälter und Außenbehälter weitestgehend evakuiert ist. Andererseits ist eine gezielte Wärmeeinfuhr in den Innenraum des Speicher-Innenbehälters und somit in den darin gespeicherten Kraftstoff erforderlich, da im Tank stets eine ausreichende Menge von gasförmigem Kraftstoff vorliegen soll, nachdem der Kraftstoff der Brennkraftmaschine im gasförmigen Zustand zugeführt wird.

Beim bekannten Stand der Technik erfolgt der gewünschte Wärmeeintrag in den Innenbehälter mittels eines in diesem angeordneten elektrisch betriebenen Heizelements, zu dessen Energie-Versorgung Leitungen in den Kryotank hinein bzw. aus diesem herausgeführt sein müssen, siehe beispielsweise DE 4212625 A oder DE 42 2626 A. Gleiches gilt für eine andere Methode des gezielten Wärmeeintrags, bei der bereits gasförmiger Kraftstoff durch den noch flüssigen Kraftstoff hindurchgeleitet wird. Auch hier ist für die gezielte Einleitung des gasförmigen Kraftstoffs zumindest eine separate Rohr-Leitung mit Schalt-Ventilen und dgl. erforderlich.

Selbst wenn bei diesen bekannten Systemen kein Wärmeeintrag in den Speicher-Innenbehälter erfolgen soll, so wirken die genannten Leitungen als stets vorhandene Wärmebrücke, über die kontinuierlich eine zwar geringe, jedoch nicht zu vernachlässigende Wärmemenge zum gespeicherten Kraftstoff gelangt, was grundsätzlich unerwünscht ist. Ein weiterer Nachteil dieser bekannten Systeme ist deren Hystereseverhalten, insbesondere beim Abschalten, d.h. nach dem Abschalten des gezielten Wärmeeintrags wird dem gespeicherten Kraftstoff für eine gewisse Zeitspanne unerwünschterweise weiterhin Wärme in nicht unerheblichem Umfang zugeführt.

Eine Abhilfemaßnahme für diese geschilderte Problematik aufzuzeigen, ist Aufgabe der vorliegenden Erfindung.

Die Lösung dieser Aufgabe ist dadurch gekennzeichnet, dass ein umschaltbares Wärmebrücken-Element, über das eine wärmeleitende Verbindung zwischen der Wand des Innenbehälters sowie der Wand des Außenbehälters herstellbar oder unterbrechbar ist, vorgesehen ist. Vorteilhafte Aus- und Weiterbildungen sind Inhalt der Unteransprüche.

Erfindungsgemäß ist ein spezielles Element praktisch zwischen dem Innenbehälter und dem Außenbehälter und somit im Isolationsvakuum vorgesehen, mit dem dieses Isolationsvakuum schaltbar überbrückt werden kann. Dieses sog. Wärmebrücken-Element ist umschaltbar und kann somit von einer sog. Schließposition, in der es eine wärmeleitende Verbindung zwischen der Wand des Innenbehälters und der Wand des Außenbehälters herstellt, in eine geöffnete Position, in der diese Verbindung unterbrochen und somit das Isolationsvakuum nicht überbrückt ist, gebracht werden. Ähnlich einer Stecker-Buchsen-Verbindung oder einem elektrischen Schalter oder dgl. kann hierzu das Wärmebrücken-Element ein an der Außenseite der Innenbehälter-Wand befestigtes sog. Aufnahme-Element sowie ein an der Innenseite der Außenbehälter-Wand befestigtes sog. Abgabe-Element aufweisen, von denen zumindest eines relativ zum anderen bewegbar ist.

Solange das Aufnahme-Element und das Abgabe-Element voneinander getrennt sind und somit nicht in wärmeleitender oder wärmeübertragender Verbindung miteinander stehen, solange ist (mit Ausnahme der Wärmestrahlung) praktisch jeglicher Wärmeeintrag in den Kryotank bzw. jegliche Wärmezufuhr zum darin gespeicherten Kraftstoff über dieses Wärmebrücken-Element mit Sicherheit unterbunden. Insbesondere kann dann auch nicht über zwar abgesperrte, aber dennoch in den Speicherraum des Innenbehälters führende Leitungen oder dgl. dem darin befindlichen Kraftstoff Wärme zugeführt werden. Der oben genannte kontinuierliche und dabei zwar geringe, jedoch nicht zu vernachlässigende Wärmeeintrag über spezielle Leitungen, die zur gezielten Wärmezufuhr in den Kryotank vorgesehenen sind, kann demzufolge dann nicht stattfinden, wenn keine derartige gezielte Wärmezufuhr gewünscht ist. Erst wenn und nur solange dieses Wärmebrücken-Element geschlossen ist, erfolgt wie dann gewünscht ein gezielter Wärmeeintrag in das System. Wenn danach das Wärmebrücken-Element geöffnet wird, wird quasi schlagartig eine weitere Wärmezufuhr unterbunden, insbesondere wenn das dem Innenbehälter zugeordnete Aufnahme-Element eine relativ geringe Wärmekapazität besitzt. In diesem Sinne kann das sog. Aufnahme-Element des Innenbehälters eine geringere Wärmekapazität und/oder eine geringere Größe besitzen als das dem Außenbehälter zugeordnete Abgabe-Element.

Ähnlich einem Relais kann das umschaltbare Wärmebrücken-Element elektromagnetisch umschaltbar sein. Eine zugehörige elektrische Leitung zur Versorgung des Umschalt-Elektromagneten muss dabei lediglich zu dem am Außenbehälter vorgesehenen sog. Abgabe-Element, nicht jedoch zu dem am Innenbehälter vorgesehenen sog. Aufnahme-Element führen, so dass der gewünschte Effekt, nämlich keine Wärmebrücke in Form einer stets vorhandenen elektrischen Leitung, weiterhin gewährleistet ist.

Während im geöffneten Zustand dieses Wärmebrücken-Element wie erwünscht keinerlei Wärmeeintrag in das System bzw. in den darin gespeicherten Kraftstoff bewirkt, ist bei geschlossenem Wärmebrücken-Element eine bestmögliche Wärmezufuhr zum im Innenbehälter gespeicherten Kryo-Kraftstoff erwünscht. Um dies zu erreichen, kann das umschaltbare Wärmebrücken-Element derart ausgebildet sein, dass im geschlossenen Zustand ein räumlicher (und nicht nur ebener) Kontaktbereich oder Wärmeübertragungs-Bereich zwischen dem Aufnahme-Element und dem Abgabe-Element des umschaltbaren Wärmebrücken-Elements gebildet wird. Beispielsweise kann im sog. Schließzustand des Wärmebrücken-Elements ein konusförmiger Zapfen oder dgl. des Abgabe-Elements in eine entsprechende Aufnahme des Aufnahme-Elements hinragen und dabei möglichst vollständig an der entsprechenden Aufnahme-Wandung zum Anliegen kommen.

Ebenfalls im Hinblick auf einen optimierten Wärmeübergang zwischen dem Abgabe-Element und dem Aufnahme-Element kann zumindest eines dieser Elemente derart flexibel oder formveränderbar ausgebildet sein, dass im Schließzustand des Wärmebrücken-Elements ein ausreichender Wärmeübergang gewährleistet ist. Dabei können im Schließzustand diese beiden Elemente gegeneinander gepresst werden; bspw. kann das Abgabe-Element derart formveränderbar sein, dass es im geschlossenen Zustand des Wärmebrücken-Elements das Aufnahme-Element zwischen sich einspannt.

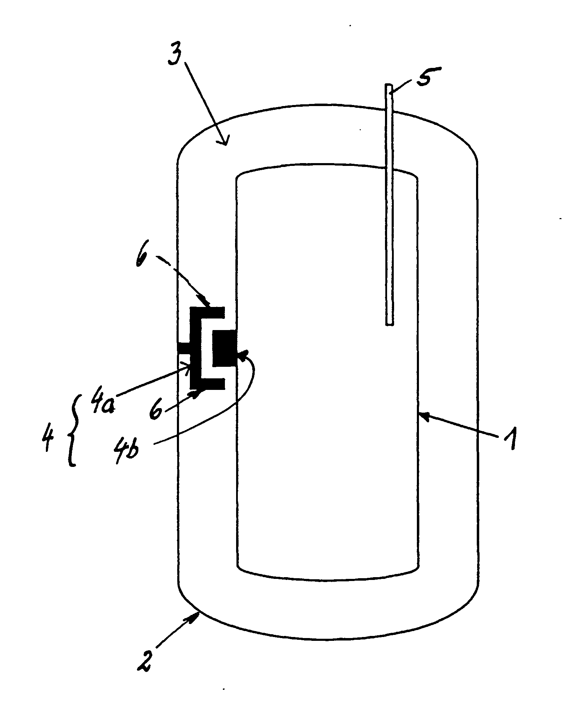

Dies sowie weitere Merkmale wird bzw. werden im folgenden anhand eines lediglich prinzipiell dargestellten Ausführungsbeispiels weiter erläutert. Die beigefügte Figur zeigt einen erfindungsgemäßen Kryotank eines Kfz's in einem Schnitt.

Mit der Bezugsziffer 1 ist der Innenbehälter eines Kraftfahrzeug-Kryotanks bezeichnet, in dem größtenteils im flüssigen Zustand befindlicher Kryo-Kraftstoff zur Versorgung einer das Kraftfahrzeug antreibenden Brennkraftmaschine oder dgl. gespeichert ist. Unter Abstand umgeben ist dieser Innenbehälter 1 von einem Außenbehälter 2, wobei der Raum 3 zwischen diesen beiden Behältern 1, 2 weitestgehend evakuiert ist, d.h. zwischen der Wand des Innenbehälters 1 und der Wand des Außenbehälters 2 liegt ein sog. Isolationsvakuum (hierfür wird ebenfalls die Bezugsziffer 3 verwendet) vor.

In den Innenraum des Innenbehälters 1 hinein bzw. aus diesem durch die Wand des Außenbehälters 2 hindurch nach außen führt eine Kraftstoffleitung 5, über die Kryo-Kraftstoff in den Innenbehälter 1 eingebracht oder Kraftstoff aus diesem zur Versorgung der genannten Brennkraftmaschine entnommen werden kann. Letzteres geschieht mit Kraftstoff, der bereits den gasförmigen Aggregatzustand eingenommen hat. Um dabei stets eine ausreichende Menge von gasförmigen Kraftstoff im Innenraum des Innenbehälters 1 zur Verfügung zu haben, kann gezielt auf geeignete Weise eine Wärmemenge in oder an den Innenbehälter 1 eingebracht bzw. übertragen werden.

Für diesen Wärmeeintrag, der nur bedarfsweise und gezielt steuerbar erfolgen soll, ist ein in seiner Gesamtheit mit der Bezugsziffer 4 bezeichnetes sog. schaltbares Wärmebrücken-Element im Isolationsvakuum-Raum 3 vorgesehen. Dieses besteht aus einem sog. Abgabe-Element 4a, das bevorzugt an der dem Innenbehälter 1 zugewandten Innenseite der Wand des Außenbehälters 2 angeordnet ist, sowie aus einem sog. Aufnahme-Element 4b, das bevorzugt an der dem Außenbehälter 2 zugewandten Außenseite der Wand des Innenbehälters 1 angebracht ist.

Im figürlich dargestellten Zustand stehen das Abgabe-Element 4a und das Aufnahme-Element 4b nicht in wärmeleitender Verbindung miteinander, so dass aufgrund des in diesem Bereich vorliegenden Isolationsvakuums 3 kein Wärmeübergang zwischen diesen beiden Elementen 4a, 4b erfolgen kann. Jedoch ist das durch diese Elemente 4a, 4b gebildete sog. Wärmebrücken-Element 4 schaltbar, so dass dessen beide Elemente 4a, 4b in eine RelativPosition gebracht werden können, in der ein Wärmeübertrag zwischen diesen Elementen 4a, 4b möglich ist. Wenn dann diese Elemente 4a, 4b in wärmeleitender Verbindung miteinander stehen, so ist das sog. Wärmebrücken-Element 4 geschlossen, während es sich im figürlich dargestellten Zustand in seinem geöffneten Zustand befindet.

Bereits eine einfache wärmeleitende Verbindung zwischen der Wand des Außenbehälters 2 und der Wand des Innenbehälters 1 sorgt dafür, dass vom Außenbehälter 2, der eine erheblich höhere Temperatur als der Innenbehälter 1 besitzt, Wärme zum Innenbehälter 1 übertragen wird. Da umgekehrt betrachtet im zeitlich relativ kurzen Schließzustand des Wärmebrücken-Elements 4 eine nicht unbeachtliche Kältemenge vom Innenbehälter 1 an den Außenbehälter 2 abgegeben wird, kann es sinnvoll sein, bspw. einen geeigneten Wärmetauscher (figürlich nicht dargestellt) am Abgabe-Element 4a bzw. an dessen auf der Außenseite des Außenbehälters 1 vorgesehenem Anschluss oder dgl. anzubringen, um ein Vereisen des Außenbehälters 1 zu verhindern. Dem an der Innenseite des Außenbehälters 2 angebrachten Abgabe-Element 4a kann somit über den besagten Wärmetauscher oder auf andere nicht dargestellte Weise durch die Wand dieses Außenbehälters 2 hindurch Wärme zugeführt werden. Solange das Wärmebrücken-Element 4 geöffnet ist, wird diese Wärme(-Menge) aufgrund des Isolationsvakuums 3 nicht weitergeleitet. Ist jedoch das Wärmebrücken-Element 4 geschlossen, so wird die an das Abgabe-Element 4a angelegte Wärme(-Menge) an das Aufnahme-Element 4b weitergeleitet, welches diese Wärme-Menge dann an die Außenwand 1a des Innenbehälters 1 abgibt. Über die Wand des Innenbehälters 1 wird diese Wärme-Menge sodann dem im Innenbehälter 1 gespeicherten Kryo-Kraftstoff zugeführt.

Das schaltbare Wärmebrücken-Element 4 ist hier nicht detailliert dargestellt, da unterschiedlichste konstruktive Ausführungsvarianten möglich sind. Beispielsweise können bewegbare sog. Backen des Abgabe-Elementes 4a, auf die in der beigefügten Figur mit einem Pfeil 6 hingewiesen ist, derart verfahrbar sein, dass sie im Schließzustand des Wärmebrücken-Elements 4 das Aufnahme-Element 4b zwischen sich einspannen. Hierdurch ist ein guter Wärmeübergang bei relativ großer Wärmeübertragungsfläche gewährleistet.

Ebenfalls nicht figürlich dargestellt sind weitere Maßnahmen zur Steigerung der Effizienz des hier vorgestellten Fahrzeug-Kryo-Tanksystems. So können spezielle Maßnahmen zur Steigerung der Wärmeübertragung zwischen dem Aufnahme-Element 4b und einem größeren Abschnitt der Außenwand 1a des Innenbehälters 1 vorgesehen sein, um den Wärmeübergang zwischen dem Aufnahme-Element 4b und dem Innenbehälter 1 zu steigern. In diesem Sinne kann der Innenbehälter 1 innenseitig oder außenseitig zumindest in der Umgebung des Aufnahme-Elements 4b mit einer Kupferfolie oder einem anderen hoch wärmeleitfähigen Material überzogen sein. Auch können Maßnahmen zur Steigerung der Wärmeübertragung zwischen dem Aufnahme-Element 4b und dem Innenraum des Innenbehälters 1 vorgesehen sein. In diesem Sinne kann sich das Aufnahme-Element 4b durch die Wand des Innenbehälters 1 hindurch nach innen in den Kryo-Kraftstoff hinein erstrecken und dabei geeignet gestaltet bzw. im Hinblick auf einen guten Wärmeeintrag geformt sein.

Besonders vorteilhaft ist, dass über das vorgeschlagene Wärmebrücken-Element 4 nicht nur gezielt Wärme von außen an den Innenbehälter 1 bzw. an den darin gespeicherten Kraftstoff abgegeben werden kann, sondem dass dieses oder ein weiteres vergleichbar gestaltetes Wärmebrücken-Element zusätzlich zur Kühlung des Innenbehälters vorgesehen sein kann. Insbesondere vor einem Befüllvorgang des Kryotanks kann somit dessen-Innenbehälter 1 vorteilhafterweise vorgekühlt werden, wenn an das Abgabe-Element 4a am Außenbehälter 2 auf geeignete Weise Kälte angelegt wird, d.h. wenn das Abgabe-Element 4a stark gekühlt wird.

Was die Anordnung des schaltbaren Wärmebrücken-Elements 4 im Isolationsvakuum-Raum 3 zwischen der Wand 1a des Innenbehälters 1 und der Wand 2a des Außenbehälters 2 betrifft, so kann dieses Wärmebrücken-Element 4 bspw. an einer Strebe oder dgl. angeordnet sein, über die der Innenbehälter 1 am Außenbehälter 2 abgestützt ist, wobei diese Strebe selbst - wie üblich - derart gestaltet ist, dass sie nur eine minimale Wärmebrücken-Funktion ausübt, d.h. selbst möglichst wenig wärmeleitend ist, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. Stets kann mit einem erfindungsgemäßen schaltbaren Wärmebrücken-Element 4 bei Bedarf, d.h. im geschlossenen Zustand, eine Wärmemenge von außen in den Kryotank eingeleitet werden, während im geöffneten Zustand dieses Wärmebrücken-Element 4 keine zusätzliche Wärmebrücke bildet, so dass dann jeglicher Wärmeeintrag über dieses Wärmebrücken-Element 4 unterbunden ist.

## Patentansprüche

1. Fahrzeug-Kryotank zum Aufbewahren eines Kryo-Kraftstoffs in einem Kraftfahrzeug, mit einem Speicher-Innenbehälter (1) sowie einem diesen unter Ausbildung eines Isolationsvakuums (3) umgebenden Au-ßenbehälter (2), wobei ein Wärmeeintrag von außen in oder an den Innenbehälter (1) einschaltbar bzw. ausschaltbar ist,
**gekennzeichnet durch** ein umschaltbares Wärmebrücken-Element (4), über das eine wärmeleitende Verbindung zwischen der Wand des Innenbehälters (1) und der Wand des Außenbehälters (2) herstellbar oder unterbrechbar ist.

2. Fahrzeug-Kryotank nach Anspruch 1,
**dadurch gekennzeichnet, dass** das Wärmebrücken-Element (4) ein an der Außenseite der Wand des Innenbehälters (1) befestigtes Aufnahme-Element (4b) sowie ein an der Innenseite der Wand des Außenbehälters (2) befestigtes Abgabe-Element (4a) aufweist, von denen zumindest eines relativ zum anderen bewegbar ist.

3. Fahrzeug-Kryotank nach Anspruch 1 oder 2,
**dadurch gekennzeichnet, dass** das umschaltbare Wärmebrücken-Element (4) elektromagnetisch umschaltbar ist.

4. Fahrzeug-Kryotank nach einem der vorangegangenen Ansprüche,
**dadurch gekennzeichnet, dass** das umschaltbare Wärmebrücken-Element (4) derart ausgebildet ist, dass im geschlossenen Zustand ein räumlicher Kontaktbereich oder Wärmeübertragungs-Bereich zwischen dem Aufnahme-Element (4b) und dem Abgabe-Element (4a) gebildet wird.

5. Fahrzeug-Kryotank nach einem der vorangegangenen Ansprüche,
**dadurch gekennzeichnet, dass** das dem Innenbehälter (1) zugeordnete Aufnahme-Element (4b) eine geringere Wärmekapazität und/oder Größe besitzt als das dem Außenbehälter (2) zugeordnete Abgabe-Element (4a).

6. Fahrzeug-Kryotank nach einem der vorangegangenen Ansprüche,
**dadurch gekennzeichnet, dass** am Abgabe-Element (4a) ein Wärmetauscher vorgesehen ist.

7. Fahrzeug-Kryotank nach einem der vorangegangenen Ansprüche,
**dadurch gekennzeichnet, dass** das Abgabe-Element (4a) und/oder das Aufnahme-Element (4b) derart flexibel oder formveränderbar ausgebildet sind, dass im Schließzustand des Wärmebrücken-Elements (4) ein ausreichender Wärmeübergang gewährleistet ist.

8. Fahrzeug-Kryotank nach einem der vorangegangenen Ansprüche,
**dadurch gekennzeichnet, dass** das Abgabe-Element (4a) derart formveränderbar ist, dass es im geschlossenen Zustand des Wärmebrücken-Elements (4) das Aufnahme-Element (4b) zwischen sich einspannt.

9. Fahrzeug-Kryotank nach einem der vorangegangenen Ansprüche,
**gekennzeichnet durch** Maßnahmen zur Steigerung der Wärmeübertragung zwischen dem Aufnahme-Element (4b) und einem größeren Abschnitt der Wand des Innenbehälters (1).

10. Fahrzeug-Kryotank nach einem der vorangegangenen Ansprüche,
**gekennzeichnet durch** Maßnahmen zur Steigerung Wärmeübertragung zwischen dem Aufnahme-Element (4b) und dem Innenraum des Innenbehälters (1).

11. Fahrzeug-Kryotank nach einem der vorangegangenen Ansprüche,
**dadurch gekennzeichnet, dass** das oder ein weiteres Wärmebrücken-Element zusätzlich zur Kühlung des Innenbehälters vorgesehen ist.

## Claims

1. A cryogenic tank for storing a cryogenic fuel in a motor vehicle, comprising an inner storage container (1) surrounded by an outer container (2) so as to form an insulating vacuum (3), an external heat supply being connectable to and disconnectable from the inner container (1),
**characterised by** a switchable thermal bridge element (4) for making or breaking a heat-conducting connection between the wall of the inner container (1) and the wall of the outer container (2).

2. A tank according to claim 1, **characterised in that** the thermal bridge element (4) comprises a receiving element (4b) fastened to the outside of the wall of the inner container (1) and a delivery element (4a) fastened to the inside of the wall of the outer container (2), at least one being movable relative to the other.

3. A tank according to claim 1 or 2, **characterised in that** the switchable thermal bridge element (4) is electromechanically switchable.

4. A tank according to any of the preceding claims, **characterised in that** the switchable thermal bridge element (4) is so constructed that when closed, it forms a three-dimensional contact region or heat transfer region between the receiving element (4b) and the delivery element (4a).

5. A tank according to any of the preceding claims, **characterised in that** the receiving element (4b) associated with the inner container (1) has a lower thermal capacity and/or is smaller than the delivery element (4a) associated with the outer container (2).

6. A tank according to any of the preceding claims, **characterised in that** a heat exchanger is provided on the delivery element (4a).

7. A tank according to any of the preceding claims, **characterised in that** the delivery element (4a) and/or the receiving element (4b) are flexible or variable in shape so as to ensure an adequate heat transfer when the thermal bridge element (4) is closed.

8. A tank according to any of the preceding claims, **characterised in that** the delivery element (4a) is variable in shape so as to clamp the receiving element (4b) inside it when the thermal bridge element (4) is closed.

9. A tank according to any of the preceding claims, **characterised by** means for increasing the heat transfer between the receiving element (4b) and a larger portion of the wall of the inner container (1).

10. A tank according to any of the preceding claims, **characterised by** means for increasing the heat transfer between the receiving element (4b) and the interior of the inner container (1).

11. A tank according to any of the preceding claims, **characterised in that** the or another thermal bridge element is additionally provided for cooling the inner container.

## Revendications

1. Réservoir cryogénique de véhicule destiné au stockage d'un carburant cryogénique dans un véhicule automobile, comprenant un récipient intérieur à accumulateur (1) ainsi qu'un récipient extérieur (2) entourant celui-ci en formant un vide d'isolation (3), un apport thermique en provenance de l'extérieur pouvant être activé ou désactivé dans le récipient intérieur (1) ou au niveau de celui-ci,
**caractérisé par**
un élément commutable formant des ponts thermiques (4) qui permet de réaliser une liaison thermoconductrice entre la paroi du récipient intérieur (1) et la paroi du récipient extérieur (2) ou de l'interrompre.

2. Réservoir cryogénique de véhicule selon la revendication 1,
**caractérisé en ce que**
l'élément formant des ponts thermiques (4) présente un élément de réception (4b) fixé sur la face extérieure de la paroi du récipient intérieur (1) ainsi qu'un élément de transmission (4a) fixé sur la face intérieure de la paroi du récipient extérieur (2), lesquels peuvent se déplacer au moins l'un par rapport à l'autre.

3. Réservoir cryogénique de véhicule selon la revendication 1 ou 2,
**caractérisé en ce que**
l'élément commutable formant des ponts thermiques (4) peut être commuté électromagnétiquement.

4. Réservoir cryogénique de véhicule selon l'une des revendications précédentes,
**caractérisé en ce que**
l'élément commutable formant des ponts thermiques (4) est configuré pour que lorsqu'il est à l'état fermé, une zone de contact dans l'espace ou une zone de transfert de chaleur est formée entre l'élément de réception (4b) et l'élément de transmission (4a).

5. Réservoir cryogénique de véhicule selon l'une des revendications précédentes,
**caractérisé en ce que**
l'élément de réception (4b) associé au récipient intérieur (1) a une capacité thermique et/ou grandeur inférieure à l'élément de transmission (4a) associé au récipient extérieur (2).

6. Réservoir cryogénique de véhicule selon l'une des revendications précédentes,
**caractérisé en ce qu'**
un échangeur de chaleur est prévu sur l'élément de transmission (4a).

7. Réservoir cryogénique de véhicule selon l'une des revendications précédentes,
**caractérisé en ce que**
l'élément de transmission (4a) et/ou l'élément de réception (4b) sont flexibles ou déformables de manière à assurer un transfert de chaleur suffisant lorsque l'élément formant des ponts thermiques (4) est à l'état fermé.

8. Réservoir cryogénique de véhicule selon l'une des revendications précédentes,
**caractérisé en ce que**
l'élément de transmission (4a) est déformable de manière à serrer l'élément de réception (4b) contre lui lorsque l'élément formant des ponts thermiques (4) est à l'état fermé.

9. Réservoir cryogénique de véhicule selon l'une des revendications précédentes,
**caractérisé par**
des mesures destinées à faire augmenter le transfert de chaleur entre l'élément de réception (4b) et une grande partie de la paroi du récipient intérieur (1).

10. Réservoir cryogénique de véhicule selon l'une des revendications précédentes,
**caractérisé par**
des mesures destinées à augmenter le transfert de chaleur entre l'élément de réception (4b) et la zone intérieure du récipient intérieur (1).

11. Réservoir cryogénique de véhicule selon l'une des revendications précédentes,
**caractérisé en ce que**
l'élément formant des ponts thermiques, ou un autre, est prévu en plus pour refroidir le récipient intérieur.
